Europäisches Patentamt

European Patent Office

Office européen des brevets

(11) Publication number: **0 385 435**
**A2**

# EUROPEAN PATENT APPLICATION

(21) Application number: **90103899.2**

(51) Int. Cl.⁵: **G06F 15/31**

(22) Date of filing: **28.02.90**

(30) Priority: **28.02.89 JP 46751/89**

(43) Date of publication of application:
**05.09.90 Bulletin 90/36**

(84) Designated Contracting States:
**DE FR GB**

(71) Applicant: **SONY CORPORATION**
**7-35, Kitashinagawa 6-chome Shinagawa-ku**
**Tokyo(JP)**

(72) Inventor: **Sakamoto, Akira, c/o Sony**
**Corporation**

**7-35, Kitashinagawa, 6-chome**
**Shinagawa-ku, Tokyo(JP)**
**Inventor: Nakagawa, Taro, c/o Sony**
**Corporation**
**7-35, Kitashinagawa, 6-chome**
**Shinagawa-ku, Tokyo(JP)**

(74) Representative: **Schmidt-Evers, Jürgen,**
**Dipl.-Ing. et al**
**Patentanwälte Mitscherlich, Gunschmann**
**Dr. Körber, Schmidt-Evers, Melzer, Dr. Schulz**
**Steinsdorfstrasse 10**
**D-8000 München 22(DE)**

(54) **Digital signal processing apparatus and method.**

(57) A digital signal processing apparatus including at least an instruction RAM (3), a data RAM (4) and a computing block (6), wherein, according to the present invention, a start signal detection device (7) is provided for detecting the start signal indicating the leading part of the program execute cycle, and at least one instruction cycle of the program execute cycle is not used to execute the program instructions, but is used to perform setting of an operational mode from a microcomputer or rewriting of the coefficient RAM (5) or the instruction RAM (3) in the course of digital signal processing without interruption of the digital signal processing.

**FIG.1**

# DIGITAL SIGNAL PROCESSING APPARATUS AND METHOD

## BACKGROUND OF THE INVENTION

### Field of the Invention

This invention relates to an apparatus and method for processing digital signals, such as digital audio signals.

### Description of the Prior Art

Recently, it has become customary to perform various digital signal processing operations, including numerical computations, such as computations for digital filters, fast Fourier transform (FFT) or correlative functions, for digital signals such as digitized audio or video signals, on the real-time basis, and a variety of digital signal processing apparatus, and the method of its operation, known as DSP, have been evolved to perform such real time operations. In general, the DSP includes a computing block to perform arithmetic operations, such as multiplication or addition, an instruction RAM for writing a microprogram stating the signal processing sequence, a data RAM for transient data storage, and a coefficient RAM for storing coefficients employed in the arithmetic operation in the computing block.

Thus, under the control of the microprogram, written in the instruction RAM, data are read out from the data RAM and the coefficient RAM, and the arithmetic operation is performed at the computing block for processing digital signals.

However, in the operation of the conventional DSP, several steps of the execute cycles need be allotted as the initializing steps for setting the operating mode, thus presenting a problem in connection with the desired high speed processing of digital signals.

On the other hand, during the DSP operation, the instruction RAM is in the state of being read out at all times, so that, for rewriting, that is, changing the instructions in the instruction RAM, the DSP operation need be stopped transiently for such rewriting, with the result that the output data stream need be discontinued transiently to affect smooth signal processing.

## OBJECTS AND SUMMARY OF THE INVENTION

It is therefore a principal object of the present invention to provide a digital signal processing apparatus in which mode setting or rewriting in the instruction RAM or coefficient RAM can be performed smoothly without the necessity of stopping the DSP operation.

The present invention provides a digital signal processing apparatus, and the method of its operation, including an instruction RAM, a data RAM and a computing block, wherein start signal detection means is provided for detecting a start signal indicating the leading part of a program execute cycle, and wherein a rewrite cycle is provided for rewriting at least the contents of the instruction RAM responsive to a detection signal from the start signal detection means.

With the above described digital signal processing apparatus, mode setting from a microcomputer or rewriting of the instruction or coefficient RAMs can be performed at an instruction cycle prior to program execution and hence in the course of the processing operation without transiently discontinuing the processing operation.

## BRIEF DESCRIPTION OF THE DRAWINGS

Fig. 1 is a schematic block diagram showing an embodiment of a digital signal processing apparatus according to the present invention.

Fig. 2 is a timing chart for illustrating the operation of the embodiment shown in Fig. 1.

## DETAILED DESCRIPTION OF PREFERRED EMBODIMENT

By referring to the drawings, a preferred embodiment of the digital signal processing apparatus according to the present invention will be explained in detail.

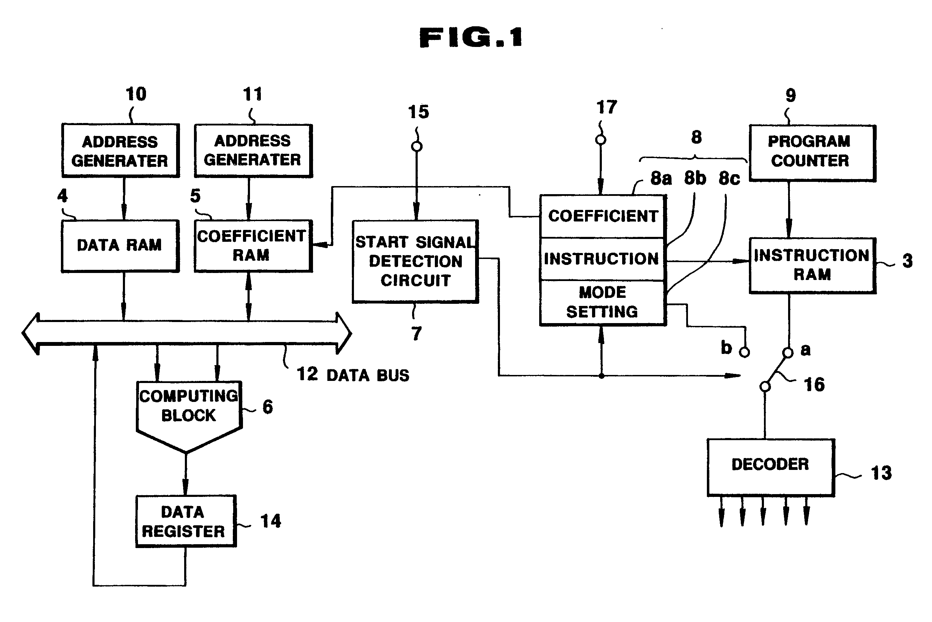

Fig. 1 is a schematic block diagram showing a digital signal processing apparatus embodying the present invention.

Referring to this figure, the digital signal processing apparatus, known as DSP, at least includes an instruction RAM 3 in which is written a microprogram indicating the digital signal processing sequence, a data RAM 4 for storing data, a coefficient RAM 5 for storing coefficients, and a computing block 6 for performing an arithmetic operation, such as addition or multiplication. It also includes a start signal detection circuit 7 for detecting a program start signal indicating the start point of the program execute cycle, and a buffer 8 for storing mode setting data, instruction rewrite data or coefficient rewrite data.

A program counter 9 is provided in association with the instruction RAM 3 and various instruction codes of the microprogram written in the instruction RAM 3 are sequentially read out in accordance with the addresses generated in the program counter 9 so as to be transmitted to a fixed terminal a of an electronic changeover switch 16. Addresses generated in an address generator 10 are transmitted to the data RAM 4 to perform data accessing, while addresses generated in an address generator 11 are transmitted to the coefficient RAM 4 to perform coefficient data accessing.

Data from the data RAM 4 and the coefficient RAM 5, for example, are transmitted to the computing block 6, either by way of a data bus 12 or directly without the interposition of the data bus 12, and are subjected to processing operations, such as multiplication or addition, before being transmitted to a data register 14. The output from data register 14 are transmitted to, for example, the data bus 12. The arithmetic operation performed in the block 6 is controlled in accordance with the counter contents obtained by decoding instruction codes of the microprogram in the instruction RAM 3 at the decoder 13.

The decoded instruction codes from the decoder 13 are supplied directly to the computing block 6. A start signal, supplied by a host computer (not shown), indicating the start point of the program execute cycle, to the start signal detection circuit 7, is input by way of a start signal input terminal 15. The detection circuit 7 is responsive to the input start signal to make a switching control of the changeover switch 16 and the buffer memory 8 as later described.

The buffer memory 8 includes, for example a memory area 8a for storing coefficient rewrite data, a memory area 8b for storing instruction rewrite data and a memory area 8c for storing mode setting data. To these memory areas 8a to 8c are transferred the rewrite data or mode setting data from the host computer by way of an input terminal 17. This buffer memory 8 is responsive to the start signal detected at the start signal detection circuit 7 to transmit coefficient rewrite data, instruction rewrite data or mode setting data stored in the memory areas 8a, 8b, 8c to the decoder 13 by way of the coefficient RAM 5, the instruction RAM 3 and the fixed terminal b of the changeover switch 16.

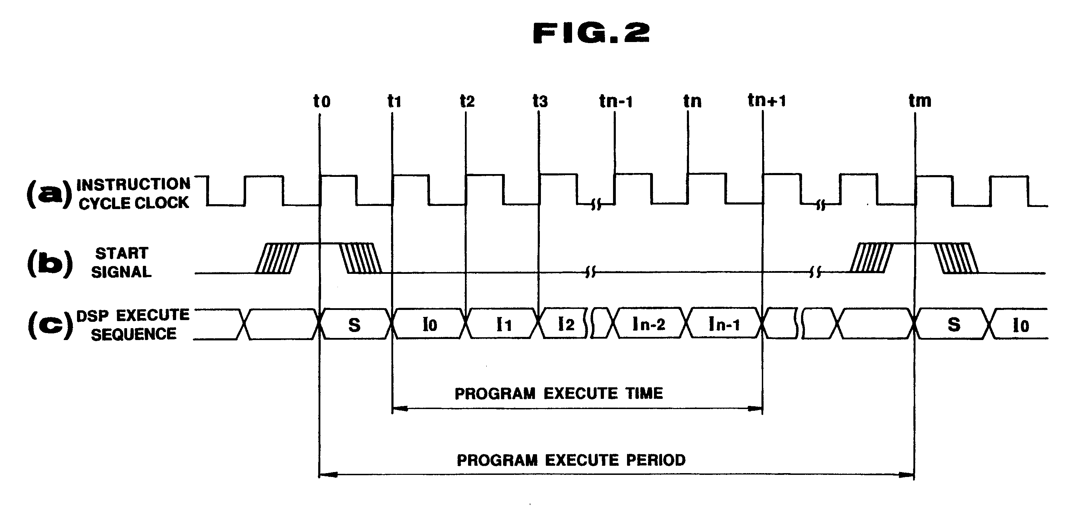

Fig. 2 shows a timing chart for the case in which the instruction cycle by the microprogram in the DSP consists of $n$ steps or $n$ instruction cycles of $I_0$, $I_1$, $I_2$, ..., $I_{n-1}$ and the program execute period consists of $m$ steps or $m$ instruction cycles, where $n$ and $m$ are natural numbers and $n < m$. The program execute period means the period of repetition, that is, the period by which the same signal processing operation is performed repeatedly. For example, when processing digital signals obtained upon sampling audio signals, for example, at a predetermined sampling period $T_s$, this sampling period $T_s$ or an integer fraction thereof proves to be the program execute period, inasmuch as the same or similar processing operation is performed at an interval of the sampling period or an integer fraction thereof. On the other hand, the time involved in actual program execution, that is the program execute time, is determined by the number of the instruction cycles of the microprogram, it being necessary for the signal processing to be completed within the program execute period.

In Fig. 2, a signal a indicates clock pulses for the command cycle, instruction cycle or the machine cycle, it being assumed that the start signal shown at b in Fig. 2 is at the "H" level at a predetermined time $t_o$ of the instruction cycle clock. According to the conventional practice, the program starts to be executed at time $t_o$, and the respective program steps are executed in the sequence of $I_0$, $I_1$, $I_2$, ..., $I_{n-1}$. In contrast thereto, at least one instruction cycle (one instruction cycle in Fig. 2c) of the rewrite cycle S is provided in the present embodiment prior to execution of the first program step $I_0$. During this rewrite cycle S, the mode setting data or instruction rewrite data, stored in the buffer memory 8, are sent to associated processing circuits to perform mode changes or instruction rewriting. That is, the start signal detection circuit 7 is responsive to the detected start signal to access the buffer memory 8 during the rewrite cycle S to read out the various data, while switching the changeover switch 16 to the side of the fixed terminal b. After the time the rewrite cycle S is terminated, or time $t_1$ in Fig. 2, the program instructions are executed until time $t_{n=1}$ in the sequence of $I_0$, $I_1$, $I_2$, ..., $I_{n-1}$, as shown at C in Fig. 2.

Meanwhile, the program execute period consists of $m$ instruction cycles, from time $t_o$ until time $t_m$.

From the foregoing it is seen that the present invention provides a digital signal processing apparatus in which the start signal indicating the leading point of the program execute period is detected and the data rewriting for the instruction RAM 3 is performed during the rewrite cycle S prior to program execution so that the mode change or data rewriting can be effected without transiently stopping the DSP operation. This means that sound interruption as conventionally encountered when changing digital filter characteristics of digital audio signals can be eliminated and the filter characteristics, for example, can be switched while the sound is reproduced without interruptions.

In addition, in contrast to the case wherein mode changing or data rewriting is performed by software techniques, that is, by so formulating the program, such mode change or data rewriting can be made mechanically at the rewrite cycle S provided at the leading point of the program execute cycle to enable the signal processing program by the DSP to be executed efficiently.

Although the foregoing description has been made of a DSP provided with the coefficient RAM 5, the present invention can naturally be applied to a DSP in which the coefficient RAM 5 is not provided, and the coefficients are programmed within the instruction RAM.

Thus, while the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility. It is therefore contemplated by the appended claims to cover any and all such modifications.

Accordingly,

## Claims

1. A digital signal processing apparatus compressing at least an instruction memory (3), a data memory (4) and a computing block (6), wherein the improvement resides in that it further comprises start signal detection means (7) for detecting a start signal indicating the leading part of a program execute cycle, and in that a rewrite program cycle is provided for executing (8) at least one of changing of the operating mode setting or rewriting of the contents of the instruction memory (3) or coefficient memory (5) in response to a detection signal from the start signal detection means (7).

2. A digital signal processing apparatus according to claim 1, wherein at least the contents of the instruction memory (3) are rewritten during the rewrite cycle.

# FIG.1

EP 0 385 435 A2

# FIG.2

(a) INSTRUCTION CYCLE CLOCK

(b) START SIGNAL

(c) DSP EXECUTE SEQUENCE

t0   t1   t2   t3   tn-1   tn   tn+1   tm

S   I0   I1   I2   In-2   In-1   S   I0

PROGRAM EXECUTE TIME

PROGRAM EXECUTE PERIOD

EP 0 385 435 A2